# EUROPEAN PATENT APPLICATION

(11) **EP 0 671 726 A2**
(43) Date of publication of application: **13.09.1995**
(21) Application number: 95103416.4
(22) Date of filing: 09.03.1995
(51) Int. Cl.: G11B 5/55, H02K 41/035

(54) **Magnetic disk unit**

(30) Priority: 11.03.1994 JP 40728/94
(71) Applicant: HITACHI, LTD., Chiyoda-ku, Tokyo 101 (JP)
(72) Inventor: Hanada, Kazuyoshi, Hadano-shi (JP); Kodama, Koji, Odawara-shi (JP); Amano, Hideaki, Odawara-shi (JP)
(74) Representative: Patentanwälte Beetz - Timpe - Siegfried Schmitt-Fumian - Mayr

(57) **Abstract**

The present invention is intended to provide a compact, energy-saving, quick-access magnetic disk unit having a reduced thickness. A coil holder (3a) for holding a driving coil (1) for moving a carriage (3) supporting a magnetic head (4) is fitted in a space surrounded by the driving coil (1). The driving coil (1) has a portion, which moves in a space between opposite permanent magnets (2a, 2b), having a thickness smaller than the other portions of the driving coil (1).

## Description

### BACKGROUND OF THE INVENTION

### Field of the Invention

The present invention relates to a magnetic disk unit and, more particularly, to an energy-saving, quick-access magnetic disk unit for a computer system and having a compact, thin construction, for application in a computer system.

### Description of the Related Art

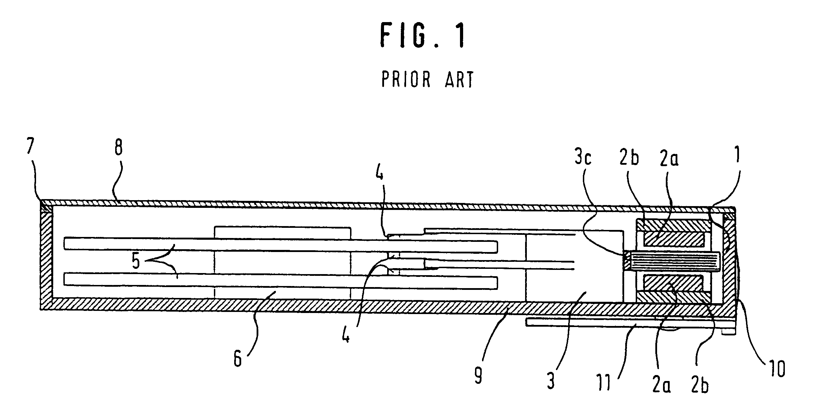

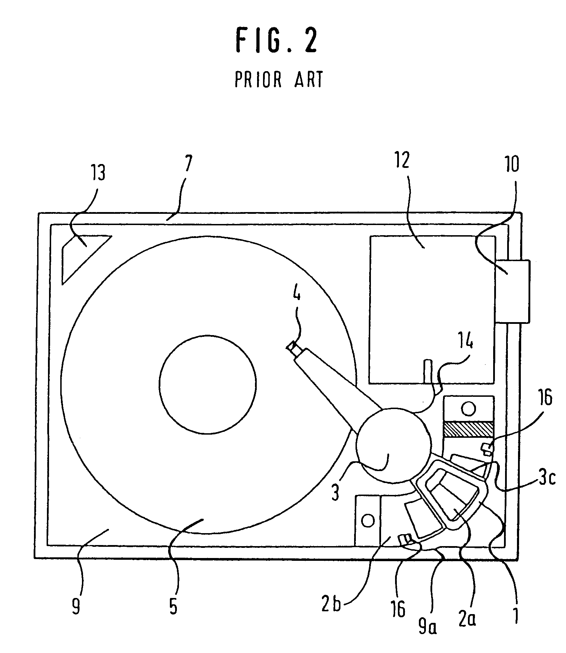

Fig. 1 is a sectional view of a conventional magnetic disk unit, and Fig. 2 is a top plan view of the magnetic disk unit, from which a cover 8 has been removed.

The magnetic disk unit comprises, as principal components, magnetic disks 5, a spindle motor 6, magnetic heads 4, a carriage 3, a voice coil motor 2 and a printed wiring board 11. Each magnetic disk 5 is formed by coating the surface of an aluminum or glass substrate with a magnetic film, and is capable of magnetically storing information as shown in Fig. 1. Each magnetic head 4 is supported afloat close to the corresponding magnetic disk 5, which magnetic disk 5 is rotated by the spindle motor 6, with a very small space on the order of 0.1 µm between the magnetic head 4 and the magnetic disk 5 so as to write information magnetically on the magnetic disk 5 or to read information from the magnetic disk 5. The principal portion of the magnetic head 4 is formed of ferrite or a metal thin film. The carriage 3 is formed of aluminum or magnesium, and locates the magnetic head 4 accurately with respect to the radial direction of the magnetic disk 5.

A driving coil 1 for swinging the carriage 3 is formed by winding an aluminum or copper wire in loops. The voice coil motor 2 comprises the driving coil 1, magnets 2a and yokes 2b. Stoppers 16 (Fig. 2) limit the movement of the carriage 3 to prevent the carriage 3 from running away due to an excessive current supplied to the driving coil 1, which prevents the magnetic heads 4 from damaging the magnetic disks 5 or from falling off the surfaces of the corresponding magnetic disks 5. These components constitute a head-disk assembly (HDA). The printed circuit board 11 (Fig. 1) is provided with an electric control circuit for controlling these components.

Conventional driving coils 1 and coil holding means are disclosed in Japanese Patent Laid-open (Kokai) Nos. 4-337573, 5-6632, and 5-20806.

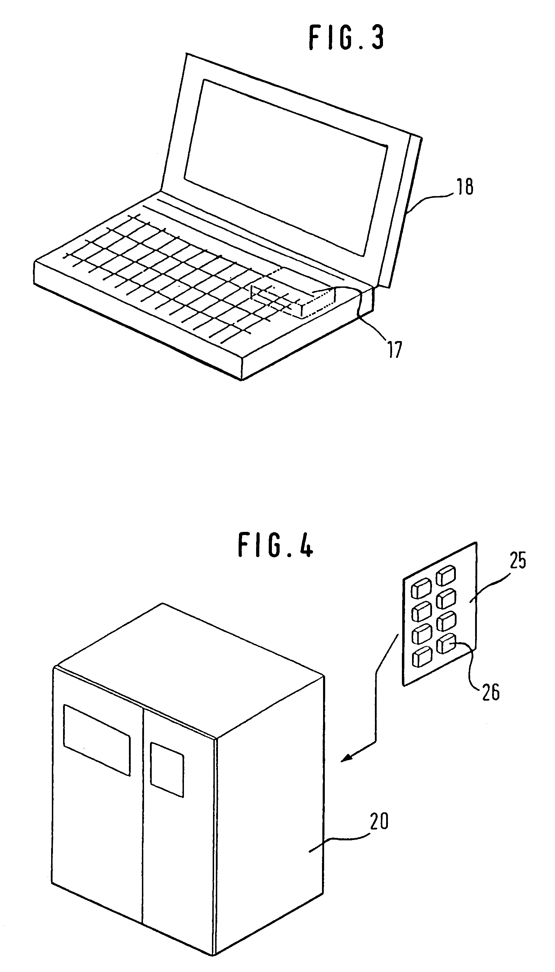

As applications of magnetic disk units have diversified, demand for a compact disk unit having a large capacity and a thin disk unit 17 to be incorporated into a laptop type personal computer 18 (Fig. 3) has increased. Further miniaturization and reduction in thickness of disk units will be necessary. For example, as shown in Fig. 1, excess space remains over and under portions of the driving coil 1 extending outside the space between the magnets 2a. Thus, the space within the disk unit is not necessarily utilized efficiently with regard to miniaturization.

Furthermore, since most laptop type personal computers operate on a battery as well as on a commercial power source, reduction in electrical energy consumption by the disk unit is very important.

On the other hand, enhancement of access speed, i.e., reduction in access time, IS important for an HDA 26, which is incorporated into a control circuit formed on a printed wiring board 25. Particularly, a computer 20 (Fig. 4) having a large capacity necessary for image processing and the like requires such a control circuit.

Measures which have been taken to reduce the thickness and the size of the disk unit without deteriorating the performance of the disk unit include the miniaturization of the head and the enhancement of the performance of the head by the use of advanced thin film forming techniques, reduction in the diameter of the disk, and reduction in the space between adjacent stacked disks. The conventional driving coil and the conventional coil attachment means, however, have not been optimized sufficiently to reduce the overall size of the disk unit, and suffer from the following drawbacks to that end.

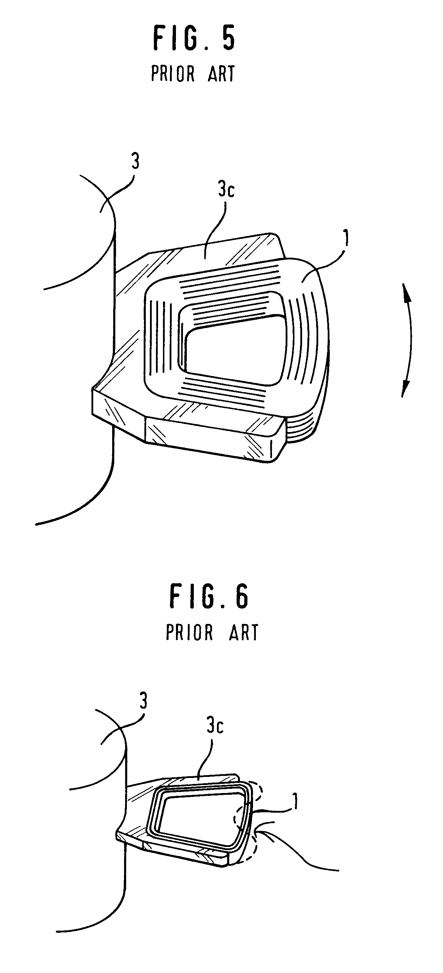

In a disk unit disclosed in Japanese Kokai No. 4-337573, the driving coil is wound in a plane perpendicular to the pivot axis of the carriage, and is substantially uniform in 349301714usl thickness, i.e., in the dimension along the pivot axis. As shown in the present Figs. 2 and 5, the driving coil 1 is adhesively attached directly to a coil holding portion 3c of the carriage 3. To use a driving coil 1 having a sufficiently large number of turns without increasing the size of the disk unit, a recess 9a is formed in the side wall of a base plate 9 and, if necessary, in a sealing member 7. To reduce the thickness of the disk unit without deteriorating the performance, expensive magnets having a high magnetic flux density must be employed instead of the magnets 2a, or a higher voltage must be applied to the driving coil 1, entailing an increase in energy consumption. Such measures, however, are not desirable.

The material, the shape, and the number of turns of the driving coil, which are principal factors specifying the driving coil, directly affect the size, energy consumption and access speed of the disk unit 17. Since the miniaturization of the head 4 reduces its weight, the miniaturization of the head 4 reduces the power required for driving the carriage 3, and the miniaturization of the disk unit reduces the number of turns needed for the driving coil.

If the disk unit is further miniaturized, the number of turns of the driving coil must be reduced and, consequently, the rigidity of the driving coil is reduced. Therefore, when only the side surface of the driving coil is joined fixedly to the coil holding portion 3c of the carriage 3, vibration of the carriage 3 (as shown in Fig. 6) adversely affects a head locating operation, which may reduce the access speed of the disk unit, making quick access impossible.

In Japanese Kokai No. 5-6632, an annular driving coil 1, which is similar to the driving coil employed in the first reference cited above, is fixed to a coil holding portion 3c of a carriage 3. If the rigidity of the driving coil 1 is not sufficiently high, the driving coil 1 will vibrate.

The disk unit disclosed in Japanese Kokai No. 5-20806 is a large-capacity disk unit provided with a plurality of disks 5 arranged in a stack, and a plurality of heads 4. This disk unit consumes a large amount of electrical energy to move the plurality of heads. Since a driving coil 1 is wound in a plane parallel to the pivoting axis of a carriage, a housing having a large vertical space is necessary, which is an obstacle to miniaturization and reduction in the thickness of the disk unit.

The conventional driving coil can easily be formed when its thickness is uniform, and the height of the driving coil as incorporated into the disk unit is dependent on the interval between a plurality of magnetic members defining a range in which the driving coil moves. Such problems have been obstacles to the miniaturization of the disk unit, the reduction of the thickness of the disk unit, the reduction of the energy consumption of the disk unit and the enhancement of the access speed of the disk unit.

In the cited references, no effective measures for the miniaturization of the disk unit, the reduction of the thickness of the disk unit, the reduction of the energy consumption and the enhancement of access speed are considered.

### SUMMARY OF THE INVENTION

Accordingly, it is an object of the present invention to provide an energy-saving, quick-access magnetic disk unit having a driving coil and a coil-holding structure suitable for forming a comparatively small rigid magnetic disk unit (HDD) having a comparatively small thickness. The invention is considered to be limited to hard disk drive units in view of the pivoting nature of the carriage motion.

With the foregoing object in mind, the present invention provides a magnetic disk unit comprising: magnetic disks for storing information, magnetic heads for recording information on and reproducing information from the magnetic disks, a carriage supporting the magnetic heads, and supported for rotation on a pivot shaft about a rotational axis of the pivot shaft to move the magnetic head radially of the magnetic disk, and a voice coil motor having driving coil means and a plurality of magnetic members which is disposed on opposite sides of a space in which the driving coil means rotates about the pivot shaft rotational axis due to rotation of the carriage, for interacting with a current flowing through the driving coil means to make the carriage rotate, which voice coil motor is held on the carriage so as to extend from a side of the pivot shaft opposite from the magnetic head.

The invention is particularly characterized in that a driving coil of said driving coil means is thin in thickness so as to minimize an assembly's thickness of said voice coil motor, thereby reducing thickness of the magnetic disk unit.

Further, the driving coil means may be fixed on the carriage through a coil holder, the coil holder may be formed of nonmagnetic material and have two generally planar faces, or a plate-shape, and the driving coil may be supported by and around the coil holder.

Moreover, the driving coil means may be fixed on the carriage through a coil holder, and have a first portion of the driving coil which has a thickness as measured parallel to the rotational axis greater than a thickness of a second portion of the driving coil as measured parallel to the rotational axis, which second portion passes between the plurality of magnetic members of the voice coil motor.

Furthermore, the driving coil means may be include a first portion diametrically opposite from the carriage, and the turns of the driving coil in the first portion may be stacked to extend away from the thin coil portion of the driving coil means.

Since the plate-shaped coil holder is fitted in the driving coil for rotatively driving the carriage holding the magnetic head of the magnetic disk unit to hold the driving coil, the driving coil will not vibrate, and thus will not affect a head locating operation adversely when the carriage swings, even if the driving coil has a comparatively small number of turns and a comparatively low rigidity. Such a driving coil and such a coil holder enable the miniaturization of the magnetic disk unit, the enhancement of access speed, and the reduction of energy consumption.

Since the thickness of the second portion of the driving coil is greater than that of the first portion of the driving coil that passes through the space between the plurality of magnetic members, a sufficiently high force for rotatively driving the carriage can be produced, and the space surrounding the driving coil can be efficiently utilized. Consequently, a compact, energy-saving, quick-access magnetic disk unit having a small thickness can be formed.

### BRIEF DESCRIPTION OF TEE DRAWINGS

Fig. 1 is a sectional view of a conventional magnetic disk unit.

Fig. 2 is a top plan view of the magnetic disk unit of Fig. 1, in which a cover is removed.

Fig. 3 is a perspective view of a laptop-type personal computer to which the present invention is applied.

Fig. 4 is a perspective view of a large-scale computer to which the present invention is applied.

Fig. 5 shows a driving coil assembly of the prior art.

Fig. 6 shows the susceptibility of the Fig. 5 driving coil assembly to vibration during carriage movement.

Fig. 7 is a sectional view of a magnetic disk unit constructed according to a first embodiment of the present invention.

Fig. 8 shows a driving coil assembly according to the present invention.

Fig. 9 shows a modification of the magnetic disk unit of Fig. 7.

Fig. 10 is a top plan view of the magnetic disk unit of Fig. 7, in which a cover is removed.

Figs. 11(A)-11(C) are explanatory views illustrating the relative dimensions of the components of a voice coil motor included in the magnetic disk unit of Fig. 9.

Fig. 12 is a graph showing the dependence of head moving time on the number of turns of a driving coil.

Fig. 13 is a sectional view of a coil holder that may be included in the magnetic disk unit of Fig. 5.

Fig. 14 is a sectional view of a modification of a coil holder that may be included in the magnetic disk unit of Fig. 5.

Fig. 15 is atop plan view of another modification of the magnetic disk unit of Fig. 7, in which a cover is removed.

Fig. 16 is a top plan view of a fourth modification of the magnetic disk unit of Fig. 7, in which a cover is removed.

Fig. 17 is a top plan view of a third modification of the magnetic disk unit of Fig. 7.

Fig. 18 is a fragmentary side view of a portion of Fig. 17.

Fig. 19 is a sectional view of a magnetic disk unit constructed according to a second embodiment of the present invention.

Fig. 20 is a perspective view of a driving coil included in a magnetic disk unit of Fig. 19.

Fig. 21 shows a driving coil assembly including the driving coil of Fig. 20.

Fig. 22 is a modification of the magnetic disk unit of Fig. 19.

Fig. 23 is a perspective view of the driving coil included in the magnetic disk unit of Fig. 22.

Fig. 24 is a top plan view of the magnetic disk unit of Fig. 19, in which a cover is removed.

Fig. 25 is a perspective view of a modification of the driving coil included in the magnetic disk unit of Fig. 19.

Fig. 26 is a top plan view of another modification of the magnetic disk unit of Fig. 19, in which a cover is removed.

### DETAILED DESCRIPTION OF THE PREFERRED EMBODIMENTS

The fundamental construction of a magnetic disk unit will be described hereinafter.

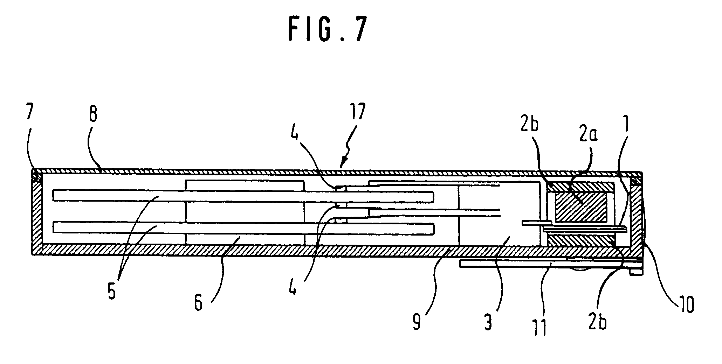

Referring to Fig. 7 showing a sectional view of a magnetic disk unit (HDD) 17 in a preferred embodiment according to the present invention, each of the rigid magnetic disks 5 for magnetically storing information is formed by coating the surface of an aluminum or glass substrate with a magnetic film. A spindle motor 6 drives the magnetic disks 5 for rotation. Each of magnetic heads 4 formed of ferrite or a metal thin film is provided with a coil for electromagnetic signal conversion. A carriage 3 formed of aluminum or magnesium holds each magnetic head 4 afloat over the corresponding magnetic disk 5 with a fixed space on the order of 0.1 Vm between the magnetic head 4 and the magnetic disk 5 and locates the magnetic head 4 accurately relative to the magnetic disk 5. The carriage 3 holding the magnetic heads 4 is driven by a voice coil motor 2 to locate the magnetic heads 4. The voice coil motor 2 comprises a driving coil 1 formed by winding an insulated aluminum or copper wire, permanent magnets 2a, an upper yoke 2b holding the magnets 2a, and a permanent lower yoke 2b. The driving coil 1 is placed between the magnets 2a and the lower yoke 2b.

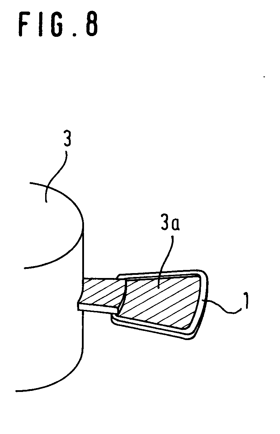

Fig. 8 is a perspective view of a driving coil assembly according to the embodiment of Fig. 7. The coil holder is plate-shaped according to this embodiment, with two horizontally-extending generally planar faces. The driving coil 1 is wrapped around and supported by the coil holder 3a.

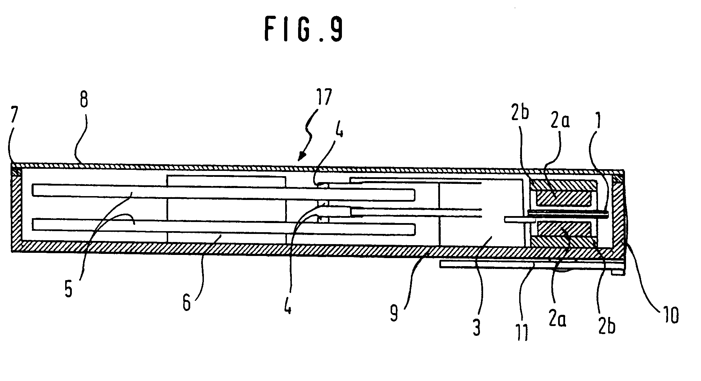

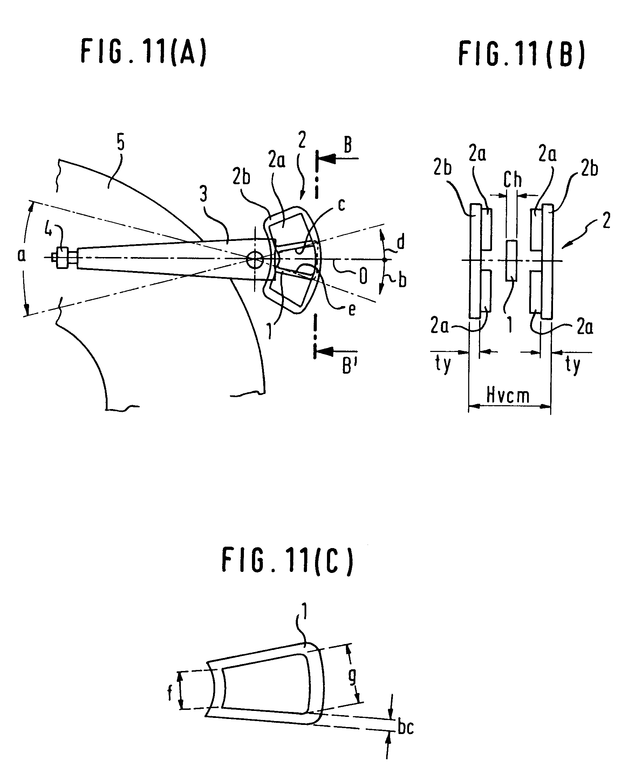

Referring to Fig. 9, which shows a magnetic disk unit 17 in a modification of the magnetic disk unit 17 of Fig. 7, a permanent magnet 2a of a S-pole and a permanent magnet 2a of a N-pole are fixed to an upper yoke 2b on one side of a driving coil 1 on opposite sides of a bisector dividing an angular range of movement of the magnetic head 4 at equal angular distances from the bisector, respectively. Permanent magnets 2a are fixed to a lower yoke 2b on the other side of the driving coil 1 so as to correspond respectively to the permanent magnets 2a fixed to the upper yoke 2b. The polarities of the permanent magnets 2a fixed to the lower yoke 2b are opposite to those of the corresponding permanent magnets 2a fixed to the upper yoke 2b. The positional relation between the yokes 2b and the permanent magnets 2a are best shown in Figs. 11(A) and 11(B). In the magnetic disk unit shown in Fig. 7, no magnet is fixed to the lower yoke 2b.

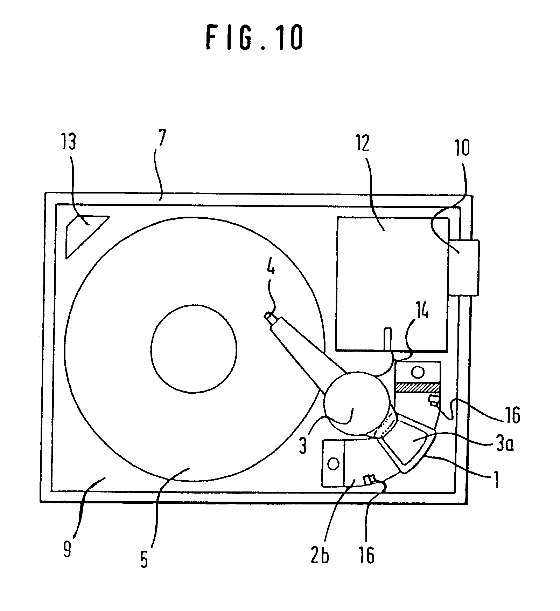

Fig. 10 is a top plan view of the magnetic disk unit 17 of Fig. 7, taken on a plane including the driving coil 1. The direction and intensity of the current flowing through the driving coil disposed between the permanent magnets 2a and the lower yoke 2b are chosen to move and locate the carriage 3. As is generally known, a force acting in a direction perpendicular to the direction of a magnetic field acts on a current-carrying wire extended across the magnetic lines of force, according to Fleming's rule. Read signals generated in the coil, not shown, of the magnetic head 4 are transferred through the carriage 3, a flexible printed circuit (FPC) 14, a printed wiring board 12 provided with a read/write control circuit for controlling read/ write operation, and a read/write FPC 10, to a printed wiring board 11 (Fig. 7) provided with a control circuit and attached to the HDA. A coil driving current for driving the driving coil 1 flows through the FPC 14 to the printed wiring board 11 attached to the HDA. The spindle motor 6, the pivot shaft on which the carriage 3 swings, and the voice coil motor 2 are fixed to the base plate 9 of a case, and a cover 8 is put on the case with a sealing member 7 inserted between the case and the cover 8 to seal the interior of the case from the atmosphere as shown in Fig. 7.

While the HDA is in operation to write information on the disk 5 via the magnetic head 4, or to read information recorded on the disk 5 via the magnetic head 4, the magnetic field must not be disturbed by foreign matter flying in the sealed space. Foreign matter included in air currents generated within the case by the rotating disk 5 are arrested by an internal filter 13 (Fig. 10) disposed within the case.

The compact, large-capacity magnetic disk unit capable of high-density recording and high-speed operation is provided with a stacked plurality of disks 5 and a plurality of magnetic heads 4 for transducing respectively the plurality of disks 5. Conventional disk spacers, not shown, are inserted between the adjacent disks 5, and the magnetic heads 4 are disposed at given intervals by finishing the head holding surfaces on which the magnetic heads 4 are attached with high accuracy.

The structure of the driving coil 1, and the dimensions of the driving coil 1 and other components of the voice coil motor 2, will be described below with reference to Figs. 11(A)-11(C).

Principal factors specifying the driving coil 1 are the shape, the material, the wire diameter, and the number of turns. Since the angular range in which the driving coil 1 moves is equal to the angular range a in which the magnetic head pivots, the driving coil 1 is preferably constructed so that its range of revolution, or swing, along the circumference of a circle having its center on the pivot axis of the carriage 3 is limited so that neither the inner surface c nor the inner surface e of the driving coil 1 will pass between opposing poles of the permanent magnets 2a on either side of the bisector o, even when the magnetic head is at the operating extremes of its swing range. The dimensions f and g of the driving coil 1, shown in Fig. 11(C), are engineered to meet this condition. Moreover, the shape of the permanent magnets 2a is determined according to the dimensions f and g.

Other features of the voice coil motor 2 are mutually dependent, and are thus engineered to optimize the performance of the voice coil motor to enable the invention to attain its objectives. For example, the material and the thickness ty of the yokes 2b have a sectional area forming a magnetic circuit that will not be saturated magnetically by the magnetic flux density of the permanent magnets 2a of the voice coil motor 2. Also, the material, the diameter of the wire (generally about 0.3 mm; 0.26 mm is a particularly suitable value), and the number of turns of the driving coil 1 are determined according to the shape of the permanent magnets 2a. The thickness ch (Fig. 11(B)) and the width bc (Fig. 11(C)) of the driving coil 1 are determined according to the material and the thickness ty of the yokes 2b, and the material, the diameter of the wire, and the number of turns of the driving coil 1. Further, since the height Hvcm (Fig. 11(B)) of the voice coil motor 2, and hence the thickness ch of the driving coil 1, are limited by the height of the magnetic disk unit 17, the magnitude of the force for moving the carriage 3 is correspondingly limited by the resistance, the inductance, and the weight of the driving coil 1. The response speed of the magnetic disk unit 17 is dependent accordingly. Of course, the number of turns of the driving coil 1 must be within an appropriate range.

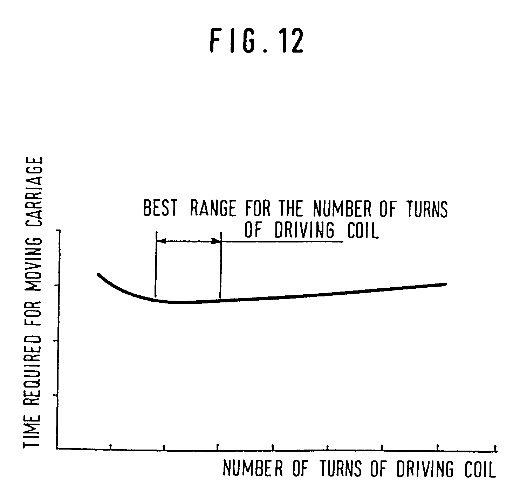

Fig. 12 is a graph showing the dependence of the time required for moving the carriage 3 on the number of turns of the driving coil 1. If the number of turns of the driving coil 1 is smaller than the lower limit of an appropriate range (experimentally determinable) of number of turns, the force acting on the carriage 3 is insufficient to drive the carriage 3 quickly, and an excessively long time is required for the force to move the carriage 3. As a result, the advantages of the material forming the driving coil 1 cannot be fully utilized. On the contrary, if the number of turns of the driving coil 1 is greater than the upper limit of the appropriate range, the resistance of the driving coil 1 is excessively high, which reduces the force acting on the carriage 3. Furthermore, to enable quick access, the components that turn together with the carriage 3 should each have a lightweight construction, and portions of the components around the magnetic heads 4, in particular, should be very light. The center of gravity of the carriage assembly and the components that turn together with the carriage 3 must coincide substantially with the axis of the pivot shaft so that the carriage 3 is able to operate normally regardless of the position of the magnetic disk unit 17.

A coil holding structure for holding the driving coil 1 that meets the aforesaid requirements and enables the miniaturization of the magnetic disk unit, the reduction of the thickness of the magnetic disk unit, the enhancement of the energy-saving performance, and the access speed of the magnetic disk unit, will be described hereinafter.

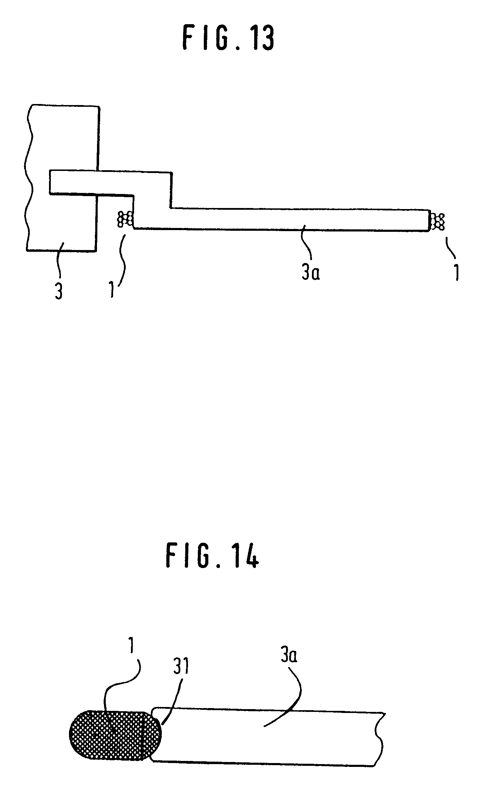

In a preferred embodiment, the driving coil 1 is wound on the side surfaces of a thin, plate-shaped coil holder 3a formed integrally with the carriage 3 as shown in Fig. 13. The coil holder 3a may have the shape shown in Fig. 10. The assembly of the carriage 3, the coil holder 3a, and the driving coil 1 held by the coil holder 3a will be designated as the carriage-coil assembly. The loops of the driving coil 1 may be fastened together with an adhesive, and the driving coil 1 may be fixed to the coil holder 3a with an adhesive. The side surfaces of the coil holder 3a must be finished smooth so that the side surfaces will not break the insulating film of the driving coil to short-circuit the driving coil 1; however, as shown in Fig. 14, a groove 31 may be formed in the side surfaces of the coil holder to further strengthen the mount of the driving coil by bonding a portion of the driving coil within the groove. The driving coil 1 may be formed by winding a wire around the coil holder 3a, or by attaching a prewound coil wire to the coil holder 3a. The loops of the driving coil 1 may be bound together with an adhesive to reduce or prevent vibration and deformation of the driving coil 1 during movement. The coil holder 3a, which may be individually fabricated and attached to the carriage 3, is preferably formed of a nonmagnetic material, such as a plastic.

In this embodiment, all of the sides of the driving coil 1 are in contact with the coil holder 3a, the driving coil 1 can be firmly held even if the driving coil 1 is not rigid. Accordingly, the driving coil 1 will not vibrate in moving the carriage 3 during a head location operation. Moreover, the access speed of the magnetic disk unit will not be reduced. Therefore, the magnetic disk unit of the present invention can be constructed smaller than the conventional magnetic disk unit, and the energy-saving performance and the access speed of the magnetic disk unit of the present invention are higher than those of the conventional magnetic disk unit.

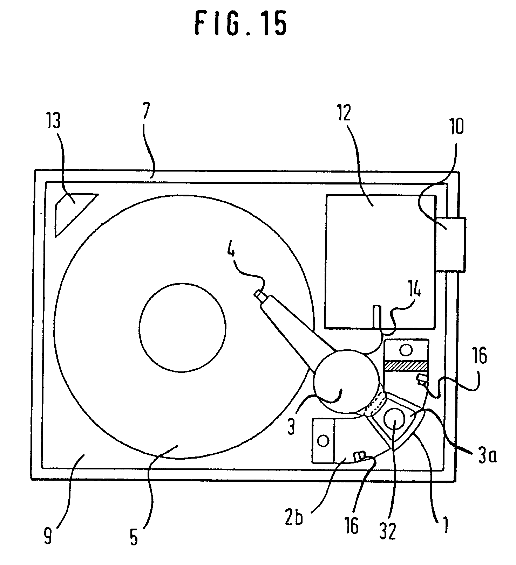

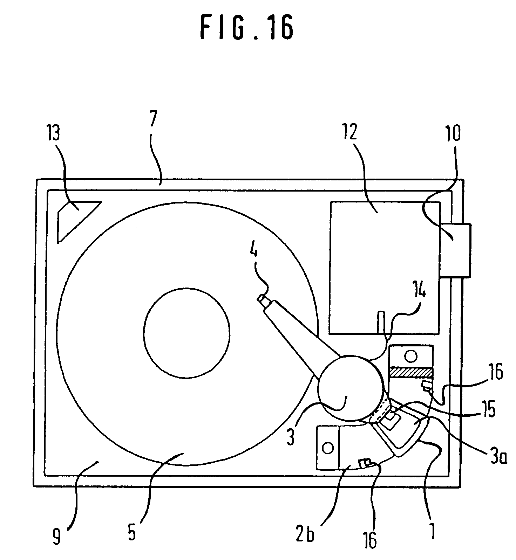

The coil holder 3a may be further provided with an opening 32 in a portion other than those portions in contact with the driving coil 1, as shown in Fig. 15, to adjust opposing weights about the pivot axis of the carriage 3 so that the carriage 3 is balanced. It is also possible to mount a weight 15 of a material different from that forming the carriage 3, such as lead or a stainless steel, in an opening formed in the coil holder 3a as shown in Fig. 16.

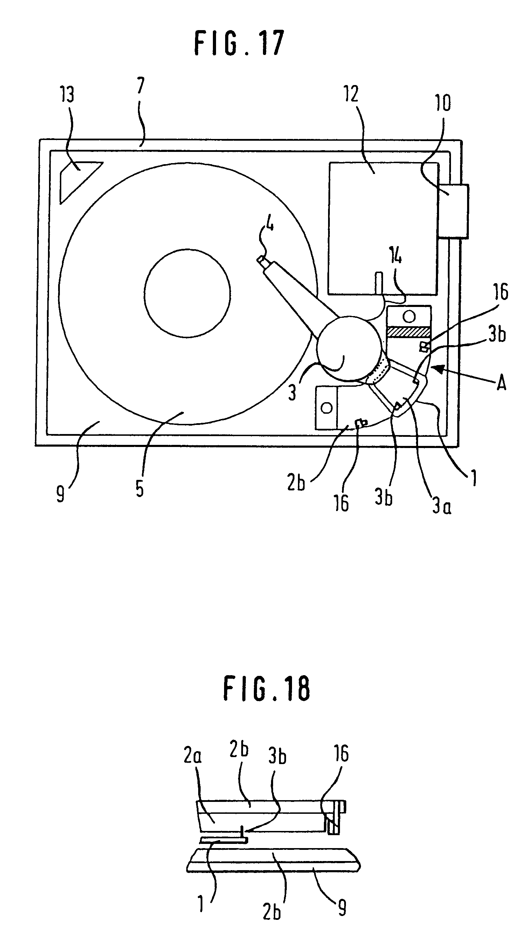

The coil support 3a may be provided with cushioning lugs 3b for colliding with the stoppers 16 as shown in Fig. 17 to compensate for the reduction of the impact resistance of the driving coil 1 as a result of the reduced thickness. Fig. 18 is a side view taken along the direction of the arrows A-AI in Fig. 17.

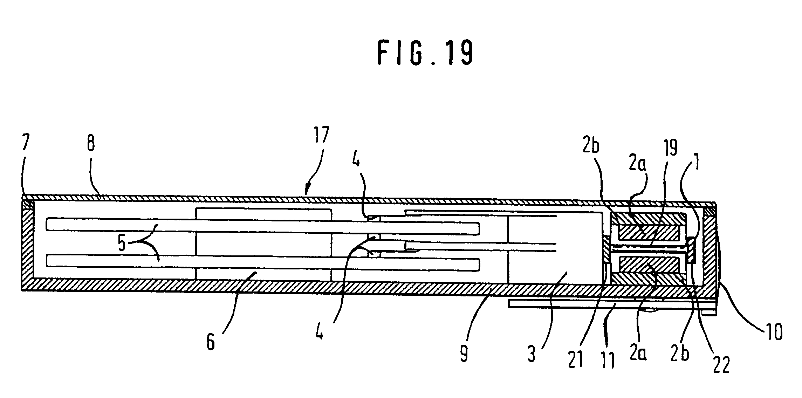

A driving coil structure that is further effective in reducing the thickness of the magnetic disk unit, and which further enhances the energy-saving performance and the access speed of the magnetic disk unit, will be described with reference to Figs. 19 to 25. Although the driving coil 1 employed in the foregoing embodiment preferably has a comparatively small number of turns and a comparatively low rigidity to enable the miniaturization of the magnetic disk unit, the driving coil 1 employed in a magnetic disk unit in another embodiment according to the present invention has a structure intended to enable the magnetic disk unit to be formed with a thickness smaller than that of the conventional magnetic disk unit, and to be capable of operating at an access speed higher than that of the conventional magnetic disk unit and at an energy consumption lower than that of the conventional magnetic disk unit.

Fig. 19 is a sectional view of a magnetic disk unit 17 constructed according to a second embodiment of the present invention. The magnetic disk unit 17 is provided with a driving coil 1 having a special shape. A portion 19 of the driving coil 1 that moves in a space between opposed permanent magnets 2a is expanded in a plane parallel to the planes of the disks 5, so that the thickness, i.e., the dimension along the pivot axis of a carriage 3, is comparatively small, and portions 21 and 22 of the driving coil 1 extending outside the space between the permanent magnets 2a are expanded in a direction parallel to the pivot axis of the carriage 3. No coil holder corresponding to coil holder 3a is necessary for this embodiment because the structure of the driving coil 1 is sufficiently rigid to avoid vibration during operation. The individual turns of the coil wire are bonded conventionally.

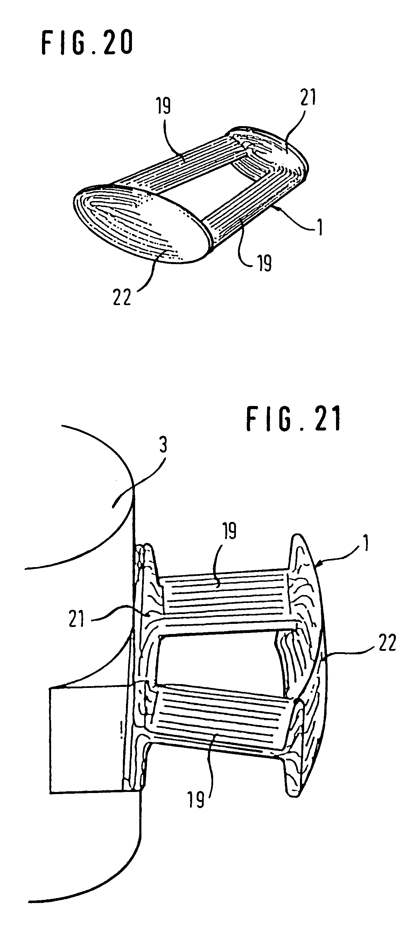

Fig. 20 is a perspective view of the driving coil 1 employed in the second embodiment. As is seen from Fig. 20, the thickness of the portion 19 that moves in the space between the permanent magnets 2a is smaller than those of the portions 21 and 22. The portions 21 and 22 may be expanded in a range between a cover 8 and a base plate 9 so long as the portions 21 and 22 are separated from the cover 8 and the base plate 9. The width, i.e., the dimension along the direction of swing or pivoting motion of the carriage 3, of the driving coil 1 may be determined so that the driving coil 1 will not collide against the parts surrounding the driving coil 1, such as the disk 5, the base plate 9 and the printed wiring board 12, which is provided with a read/write control circuit (Fig. 10), when the magnetic head 4 is moved to a position corresponding to the outermost or the innermost track of the disk 5. The carriage 3 (and the coil holder 3a, if employed) may be formed by either pressing or molding.

The portion 19 of the driving coil 1 employed in this embodiment is flattened and expanded widthwise to reduce the thickness of the magnetic disk unit 17. The expansion of the portion 19 of the driving coil 1 in the direction of the width does not require any additional space. The portions 21 and 22 of the driving coil 1 are expanded in the direction of the thickness of the driving coil 1, which reduces the length of the driving coil 1 (i.e., the size along the radial direction with respect to the pivot axis of the carriage 3) to further conserve space at little cost to the vertical dimension of the magnetic disk unit 17 because the expanded portions 21, 22 extend alongside the rest of the voice coil motor assembly.

Thus, the thickness of the driving coil 1 can be reduced without deteriorating the moving characteristic of the magnetic heads 4 and without increasing power consumption. Even if the thickness of the space available for receiving the driving coil is not large enough to receive a driving coil having the conventional shape and number of turns within the optimum range shown in Fig. 12, the driving coil 1 of the present invention, which has an optimum number of turns, can be placed in the space.

The driving coil 1 employed in this embodiment should be rigid. Although it is preferably mounted to the coil holder 3a, the driving coil 1 may be fixed by an adhesive to a conventional coil holder 3c as shown in Fig. 2, or provided with a fixing means such as an adhesive or a screw, for direct attachment to the carriage 3.

Fig. 21 shows the driving coil assembly in position on carriage 3. In the illustration, no coil holder is shown because the rigidity of the driving coil 1 is sufficient to resist vibration during a head seeking operation.

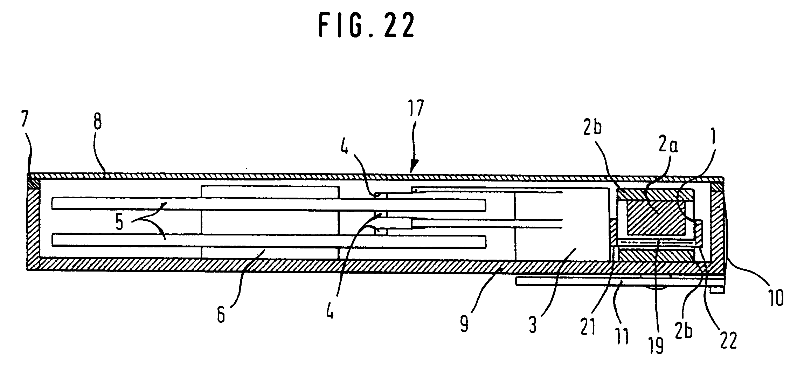

Fig. 22 shows a modification of the magnetic disk unit 17 shown in Fig. 19. As shown in Fig. 22, the magnetic disk unit 17 is provided with permanent magnets 2a attached only to an upper yoke 2b, and a driving coil 1 having portions 21 and 22 substantially extending only in the upward direction. As for the Fig. 19 embodiment, no coil holder is necessary.

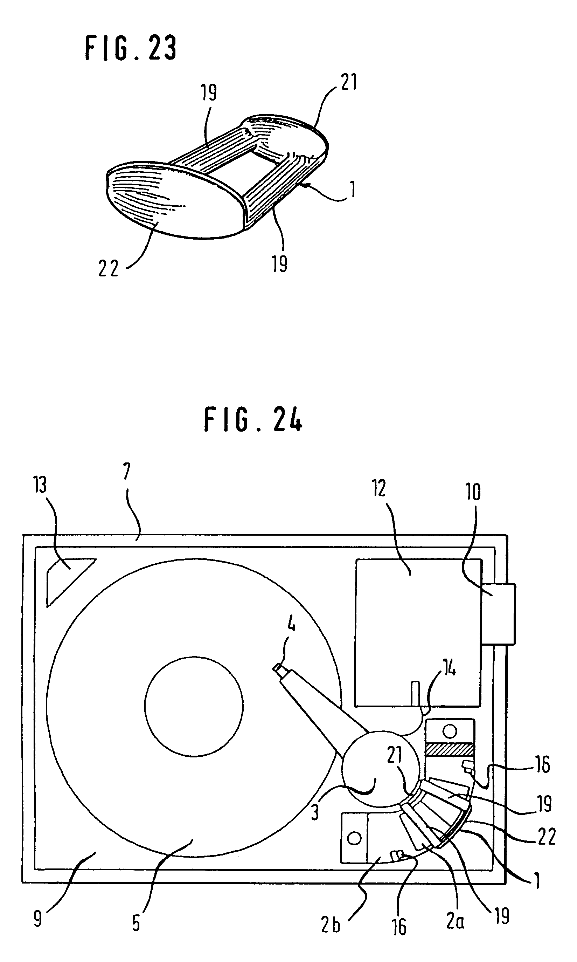

Fig. 23 illustrates the driving coil 1 of Fig. 22 in perspective. The portion 19 that moves in the space beneath the permanent magnets 2a is made thin compared to the Fig. 8 embodiment, for example, to conserve space in the magnetic disk unit 17. The portions 21, 22 may be slightly expanded downwardly, but are expanded substantially only upwardly as shown. Other features of this embodiment are similar to those of Figs. 19-22.

Fig. 24 is a top plan view of the magnetic disk unit 17 shown in Figs. 19 and 22, in which a cover 7 is removed. As shown in Fig. 24, the portion 19 of the driving coil 1 is expanded widthwise, and the length of the driving coil 1 is reduced by extending the portions 21 and 22 in the direction of the thickness.

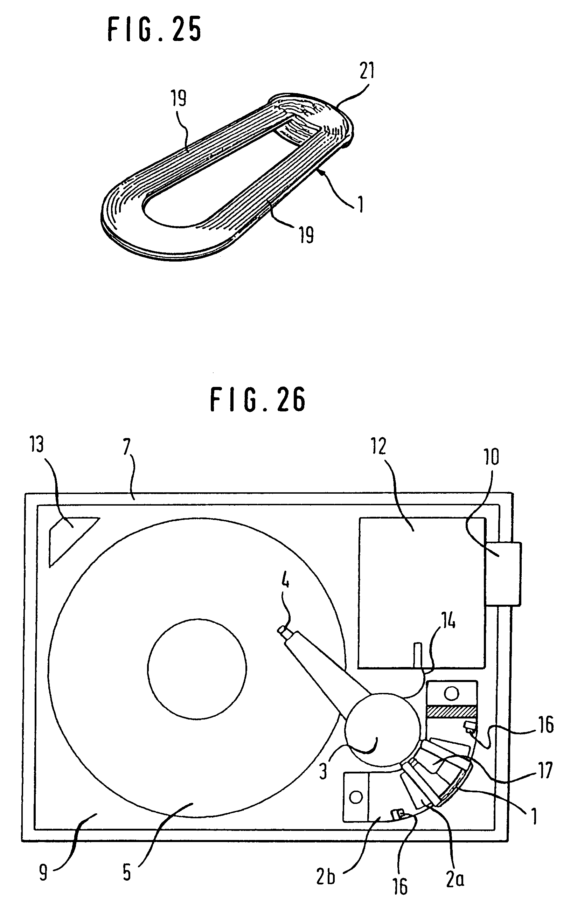

Fig. 25 shows a modification of the driving coil 1. Only a portion 21 of the driving coil 1 on the side of the carriage 3 is expanded by pressing in the direction of the thickness.

If necessary, a weight 17 of a material different from that forming the carriage 3, such as lead or a stainless steel, may be mounted in a space surrounded by the driving coil 1, as shown in Fig. 26, to adjust opposing weights about the pivot axis of the carriage 3 so that the carriage 3 is balanced.

Although specific details of the invention have been described by way of the preferred embodiments, one of ordinary skill in the art will recognize modifications to the invention based upon the foregoing disclosure. All such modifications that rely upon the teachings by which the present invention has advanced the state of the art are properly considered within the spirit and scope of the invention.

## Claims

1. A magnetic disk unit comprising:
a magnetic disk (5) for storing information;
a magnetic head (4) for recording information on and reproducing information from the magnetic disk(5);
a carriage (3) supporting the magnetic head (4), and supported for rotation on a pivot shaft about a rotational axis of the pivot shaft to move the magnetic head (4) radially of the magnetic disk (5);
a voice coil motor (2) having driving coil means and a plurality of magnetic members (2a, 2b) which is disposed on opposite sides of a space in which the driving coil (1) means rotates about the pivot shaft rotational axis due to rotation of the carriage (3), for interacting with a current flowing through the driving coil means to make the carriage (3) rotate, said voice coil motor (2) being held on the carriage (3) so as to extend from a side of the pivot shaft opposite from the magnetic head (4),
**characterized in that**
a driving coil (1) of said driving coil means is thin in thickness so as to minimize an assembly's thickness of said voice coil motor (2), thereby reducing thickness of the magnetic disk unit.

2. A magnetic disk unit according to claim 1,
characterized in that
said driving coil means is fixed on the carriage (3) through a coil holder (3a), said coil holder (3a) being formed of nonmagnetic material and having two generally planar faces, and said driving coil (1) is supported by and around the coil holder (3a).

3. A magnetic disk unit according to claim 2,
characterized in that
said coil holder (3a) includes a groove in a side surface thereof into which at least part of the driving coil (1) is fitted for support.

4. A magnetic disk unit according to claims 2 and 3,
characterized in that
the coil holder (3a) has a generally toroidal shape including an opening (32).

5. A magnetic disk unit according to claims 2 to 4,
characterized in that
said coil holder (3a) comprises a stopper (16) mounted on the coil holder (3a) to limit the range of rotation of the carriage (3).

6. A magnetic disk unit according to claim 1,
characterized in that
said driving coil means is fixed on the carriage (3) through a coil holder (3a), and has a first portion of the driving coil (1) which has a thickness as measured parallel to the rotational axis greater than a thickness of a second portion of the driving coil (1) as measured parallel to the rotational axis, said second portion passing between the plurality of magnetic members (2a, 2b) of the voice coil motor (2).

7. A magnetic disk unit according to claim 1,
characterized in that
said driving coil means includes a first portion diametrically opposite from the carriage (3), the turns of the driving coil (1) in the first portion being stacked to extend away from the thin coil portion of the driving coil means.

8. A magnetic disk unit according to claim 7,
characterized in that
the driving coil means is directly fixed to the carriage (3) by an adhesive.

9. A magnetic disk unit according to claim 7,
characterized in that
the driving coil means is directly fixed to the carriage (3) by a screw.

10. A magnetic disk unit according to claim 7,
characterized in that
the driving coil means is directly fixed to the carriage (3).

11. A magnetic disk unit according to claims 7 and 10,
characterized in that
the turns of the first portion extend in a plane perpendicular to the thin coil portion of the driving coil means in two directions.

12. A magnetic disk unit according to claims 7 and 10,
characterized in that
the turns of the first portion extend in a plane perpendicular to the thin coil portion of the driving coil means substantially in only one direction.

13. A magnetic disk unit according to claims 2, 7, 10, 11 and 12,
characterized in that
the driving coil means is constituted by a wire having a diameter of about 0.3 mm.
